# DEMANDE DE BREVET EUROPEEN

(11) **EP 3 984 691 A1**
(43) Date de publication de la demande: **20.04.2022**
(21) Numéro de dépôt: 20202328.9
(22) Date de dépôt: 16.10.2020
(51) Int. Cl.: B23P 19/04, B29C 63/12, F16B 33/00, F16B 33/06, B65H 81/00

(54) **DISPOSITIF ET PROCÉDÉ POUR EQUIPER UN FILETAGE AVEC UN REVÊTEMENT D'ÉTANCHÉITÉ**

(71) Demandeur: Société d'Étude et Construction Mécanique Générale et d'Automatisme, 51800 Sainte-Menehould (FR)
(72) Inventeur: VALLE, Stéphane, 67720 Hoerdt (FR); HENRION, Thomas, 67330 Kirrwiller (FR)
(74) Mandataire: Cabinet Bleger-Rhein-Poupon

(57) **Abrégé**

L'invention concerne un dispositif (1) pour équiper un filetage (A) avec un revêtement d'étanchéité, ce dispositif (1) comporte, d'une part, des moyens de positionnement (2) qui sont configurés pour positionner une bande d'un matériau d'étanchéité (B) par-dessus le filetage (A), d'autre part, des moyens d'application (3) qui sont configurés pour appliquer la bande d'un matériau d'étanchéité (B) contre le filetage (A) et, d'autre part encore, des moyens de montage en rotation (7) qui sont configurés pour monter le filetage (A) en rotation autour d'un axe, ceci par rapport aux moyens de positionnement (2) et/ou par rapport aux moyens d'application (3).

L'invention concerne, encore un procédé pour équiper un filetage avec un tel revêtement d'étanchéité.

## Description

L'invention concerne un dispositif pour équiper un filetage avec un revêtement d'étanchéité. Cette invention concerne, également, un procédé pour équiper un tel filetage avec un tel revêtement d'étanchéité, ce procédé étant, plus particulièrement, susceptible d'être mis en œuvre par ledit dispositif conforme à l'invention.

Cette invention concerne le domaine de la fabrication des outils destinés à assurer la préparation de pièces en vue de leur assemblage de manière étanche et par vissage. Cette invention trouvera une application particulièrement appropriée (mais aucunement limitative) lorsqu'il s'agit d'assembler une pièce comportant un filetage conique et une autre pièce, notamment une vanne comportant un filetage conique et un tuyau.

L'on connait, d'ores et déjà, des machines qui permettent de déposer une bande d'un matériau d'étanchéité (notamment du polytétrafluoroéthylène ou PTFE) sur un filetage. Cependant, ces machines ne permettent pas de déposer cette bande de manière satisfaisante. En effet, lors de l'assemblage par vissage d'une pièce dont le filetage est pourvu d'une telle bande avec une autre pièce, la bande, déposée par ces machines, a tendance à glisser par rapport au filetage et/ou à former des bourrelets ce qui ne permet pas de réaliser une étanchéité appropriée entre les pièces au niveau de l'assemblage. Il en résulte un défaut d'étanchéité qui peut se traduire par une fuite du fluide qui circule dans les pièces ainsi qu'au sein de l'assemblage. Une telle fuite n'est aucunement acceptable et peut même s'avérer particulièrement dramatique lorsqu'il s'agit d'un gaz, notamment un gaz combustible.

On observera que le phénomène de glissement ou de formation de bourrelets s'observe aussi bien sur les filetages droits que sur les filetages coniques mais est, en fait, bien plus perceptible et bien plus récurrent sur ces filetages coniques.

La présente invention se veut de remédier aux inconvénients des dispositifs et des procédés de l'état de la technique qui visent à équiper un filetage avec un revêtement d'étanchéité.

A cet effet, l'invention concerne un dispositif pour équiper un filetage avec un revêtement d'étanchéité, ce dispositif comporte, d'une part, des moyens de positionnement qui sont configurés pour positionner une bande d'un matériau d'étanchéité par-dessus le filetage , d'autre part, des moyens d'application qui sont configurés pour appliquer la bande d'un matériau d'étanchéité contre le filetage et, d'autre part encore, des moyens de montage en rotation qui sont configurés pour monter le filetage en rotation autour d'un axe, ceci par rapport aux moyens de positionnement et/ou par rapport aux moyens d'application.

Une autre caractéristique consiste en ce que les moyens de positionnement comportent, d'une part, une pince qui est configurée pour pincer la bande d'un matériau d'étanchéité et, d'autre part, des moyens de montage en déplacement de la pince par rapport au filetage.

Encore une autre caractéristique consiste en ce que le dispositif comporte des moyens de montage en déplacement pour monter en déplacement les moyens d'application, ceci entre une position inactive d'application et une position active d'application.

Une caractéristique additionnelle concerne le fait que le dispositif comporte aussi des moyens de montage en rotation pour monter en rotation autour d'un axe une bobine qui comporte la bande d'un matériau d'étanchéité.

Le dispositif conforme à l'invention comporte, encore, des moyens d'étirement qui sont configurés pour étirer la bande d'un matériau d'étanchéité.

Encore une autre caractéristique de ce dispositif concerne le fait qu'il comporte aussi des moyens de mise sous tension qui sont configurés pour mettre sous tension la bande d'un matériau d'étanchéité.

Les moyens d'application sont, alors, configurés pour appliquer sur le filetage la bande d'un matériau d'étanchéité étirée et/ou sous tension.

L'invention concerne, également, un procédé pour équiper un filetage avec un revêtement d'étanchéité, ce procédé consiste en ce qu'on positionne une bande d'un matériau d'étanchéité par-dessus le filetage, en ce qu'on applique la bande d'un matériau d'étanchéité contre le filetage, et en ce qu'on assure au moins une rotation du filetage autour d'un axe de rotation.

Encore une autre caractéristique du procédé concerne le fait que, avant d'appliquer la bande d'un matériau d'étanchéité contre le filetage, on étire cette bande d'un matériau d'étanchéité et on applique la bande étirée contre le filetage.

Une caractéristique additionnelle de ce procédé consiste en ce qu'on met la bande d'un matériau d'étanchéité sous tension, ceci au moins après avoir appliqué cette bande d'un matériau d'étanchéité contre le filetage, et au moins avant d'assurer la rotation de ce filetage.

Ainsi, le dispositif conforme à l'invention comporte un moyen d'application qui est configuré pour appliquer la bande d'un matériau d'étanchéité contre le filetage. Le procédé selon l'invention consiste, quant à lui, à appliquer une telle bande contre un tel filetage. Un tel moyen d'application et une telle application permettent, avantageusement, d'appliquer la bande d'un matériau d'étanchéité sur les filets dudit filetage ainsi qu'à l'intérieur de ces filets ce qui assure une bonne adhérence de cette bande sur ces filets ainsi qu'à l'intérieur de ces filets et, par conséquent, sur ce filetage. Une telle adhérence empêche, alors, ladite bande de glisser par rapport au filetage, ceci lors de l'assemblage des pièces dont l'une est pourvue d'un tel filetage.

Une autre caractéristique consiste en ce que le dispositif comporte un moyen d'étirement de la bande d'un matériau d'étanchéité tandis que le procédé consiste à étirer une telle bande. Un tel moyen d'étirement et un tel étirement permettent, avantageusement, de réduire localement l'épaisseur de la bande d'un matériau d'étanchéité ce qui a pour effet d'améliorer l'adhérence de cette bande sur le filetage.

Encore une autre caractéristique concerne le fait que le dispositif comporte des moyens de mise sous tension de la bande d'un matériau d'étanchéité tandis que le procédé consiste à mettre ladite bande sous tension. De tels moyens de mise sous tension et une telle mise sous tension permettent, avantageusement, de maximiser l'adhérence de ladite bande sur le filetage.

D'autres caractéristiques et avantages de l'invention ressortiront de la description détaillée qui va suivre d'un mode de réalisation non limitatif de l'invention, en référence aux figures annexées dans lesquelles :
- [figure 1] représente une vue schématisée et en perspective du dispositif pour équiper un filetage avec un revêtement d'étanchéité, ce dispositif étant conforme à la présente invention.
- [figure 2] représente une vue schématisée et de dessus du dispositif illustré figure 1.
- [figure 3] à [figure 9] représentent des vues schématisées de différentes étapes d'un procédé pour équiper un filetage avec un revêtement d'étanchéité, un tel procédé étant conforme à la présente invention.

En référence notamment aux figures susmentionnées, la présente invention concerne le domaine de la fabrication des dispositifs destinés à assurer la préparation de pièces en vue de leur assemblage de manière étanche et par vissage.

L'invention concerne, alors, plus particulièrement, un dispositif 1 pour équiper un filetage A avec un revêtement d'étanchéité. Ce dispositif 1 trouvera une application particulièrement appropriée lorsqu'il s'agit d'équiper un filetage conique A avec un tel revêtement d'étanchéité.

Un tel dispositif 1 comporte des moyens de positionnement 2 qui sont configurés pour positionner une bande d'un matériau d'étanchéité B par-dessus le filetage A.

A ce propos, on observera qu'un tel matériau d'étanchéité peut être constitué par un polymère fluoré, notamment à base de tétrafluoroéthylène et/ou un polytétrafluoroéthylène (PTFE), usuellement connu sous la dénomination commerciale de teflon.

De tels moyens de positionnement 2 comportent, d'une part, une pince 20 qui est configurée pour pincer la bande d'un matériau d'étanchéité B et, d'autre part, des moyens de montage en déplacement 21 de la pince 20 par rapport au filetage A.

A ce propos, on observera que ces moyens de montage en déplacement 21 sont, plus particulièrement, constitués par des moyens de montage en translation de la pince 20 par rapport au filetage A. En fait, de tels moyens de montage en translation sont configurés pour assurer une translation de la pince 20 selon une direction qui est perpendiculaire à un axe de rotation dudit filetage A et/ou par-dessus ce filetage A.

Les moyens de positionnement 2 peuvent, encore, comporter des moyens d'entraînement en déplacement 22 (plus particulièrement en translation) d'une partie des moyens de montage en déplacement 21 de la pince 20 et, ainsi, de cette pince 20. De tels moyens d'entraînement en déplacement 22 peuvent être motorisés.

Une autre caractéristique de ce dispositif 1 est qu'il comporte des moyens d'application 3 qui sont configurés pour appliquer la bande d'un matériau d'étanchéité B contre le filetage A.

De tels moyens d'application 3 comportent au moins une brosse 30 qui comporte des poils, notamment en un matériau synthétique, plus particulièrement en nylon.

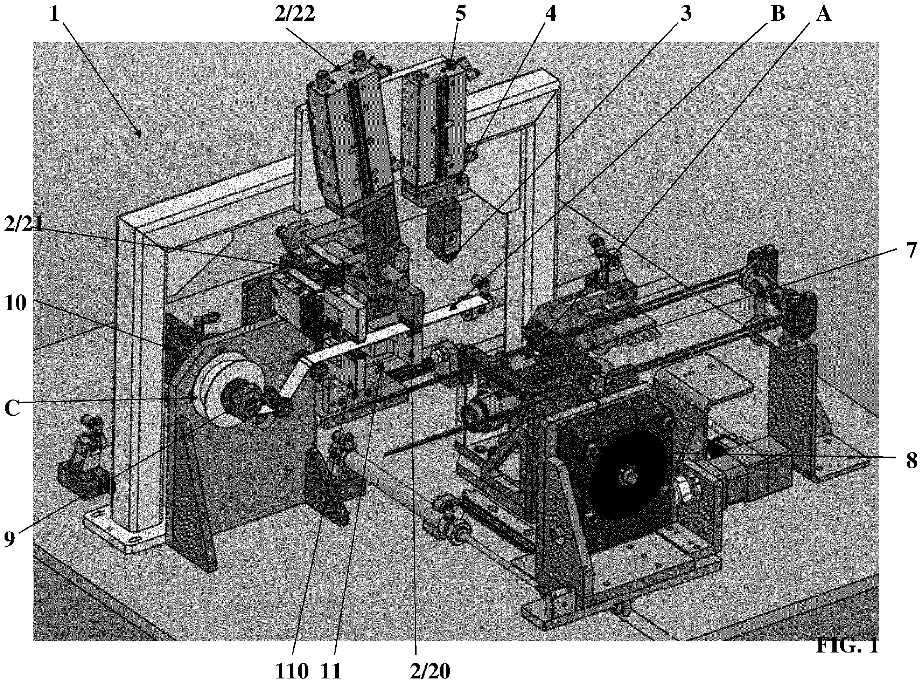

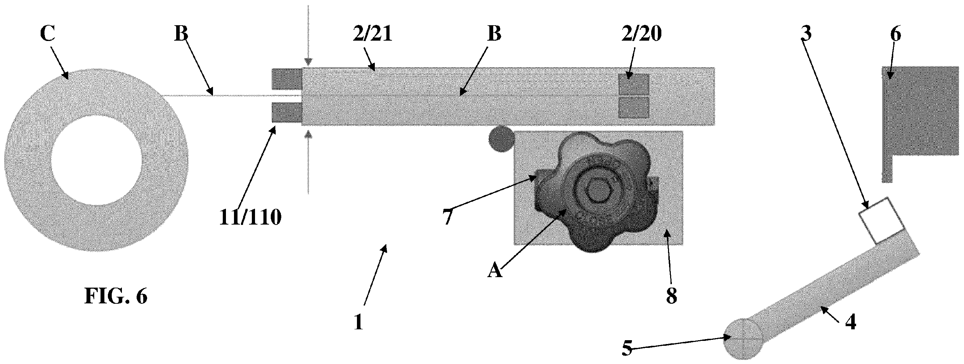

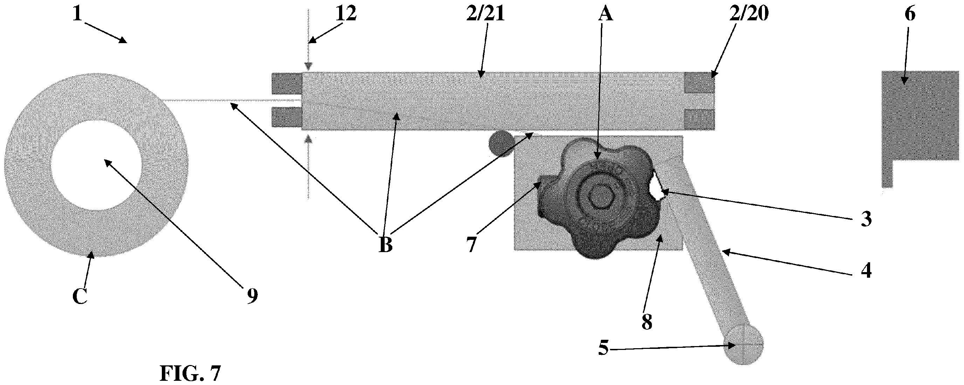

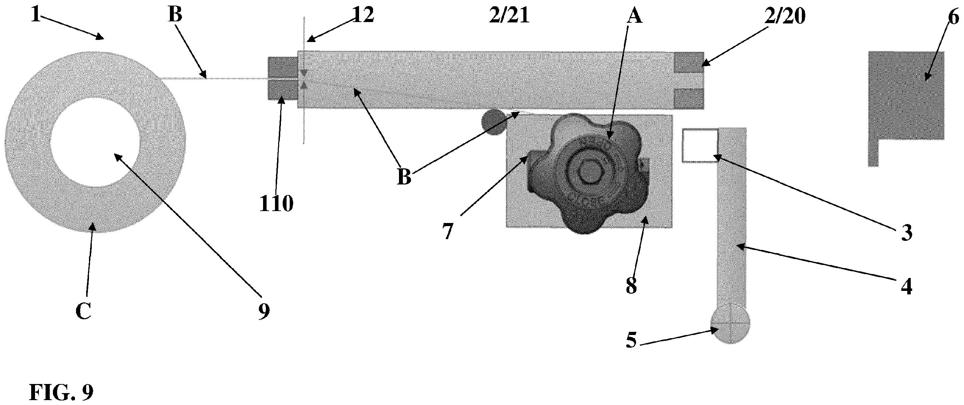

Le dispositif 1 comporte, alors, également, des moyens de montage en déplacement 4 qui sont configurés pour monter en déplacement les moyens d'application 3, ceci entre une position inactive d'application (figures 1 à 6 et 8) et une position active d'application (figures 7 et 9).

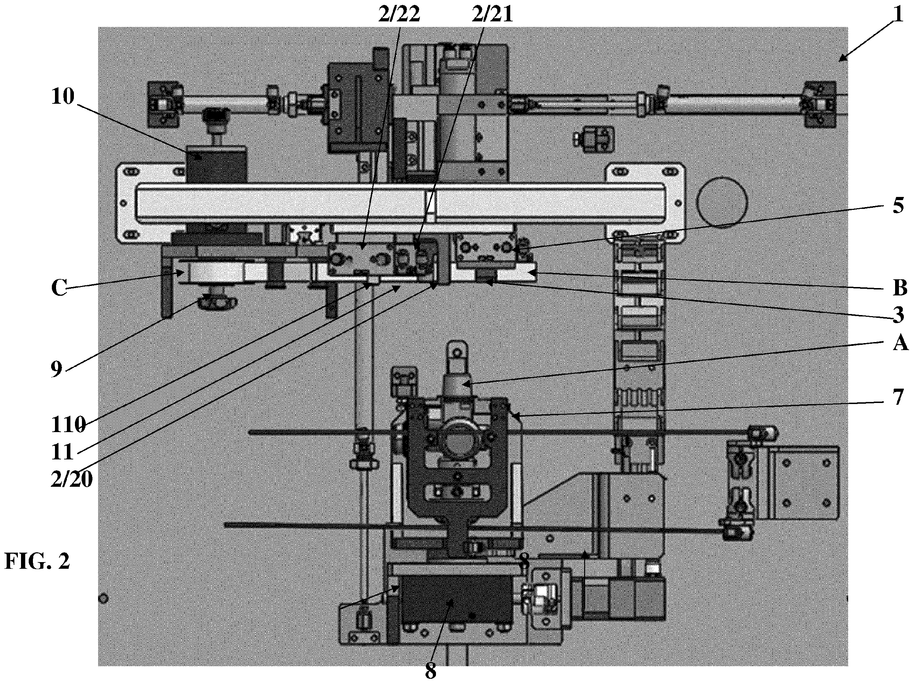

Tel que visible sur les figures 1 et 2, ces moyens de montage en déplacement 4 des moyens d'application 3 peuvent être constitués par des moyens de montage en translation de ces moyens d'application 3, notamment selon un axe perpendiculaire à l'axe de rotation du filetage A.

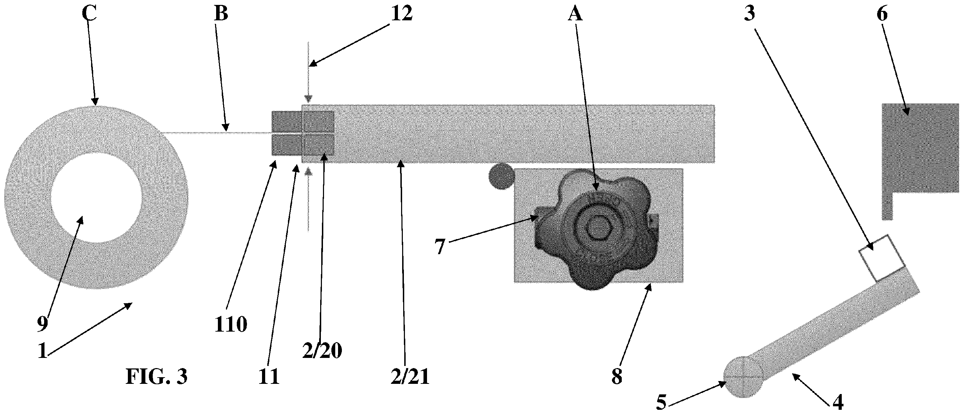

Cependant et tel que visible sur les figures 3 à 9, de tels moyens de montage en déplacement 4 des moyens d'application 3 peuvent être des moyens de montage en rotation de ces moyens d'application 3, notamment autour d'un axe parallèle à l'axe de rotation du filetage A.

Le dispositif 1 comporte, alors, également, des moyens d'entraînement en déplacement 5 (selon le cas en translation ou en rotation) d'une partie des moyens de montage en déplacement 4 des moyens d'application 3 et, ainsi, de ces moyens d'application 3. De tels moyens d'entraînement en déplacement 5 peuvent être motorisés.

Selon une caractéristique additionnelle, le dispositif 1 peut, également, comporter au moins un moyen d'humidification 6 pour humidifier les moyens d'application 3.

Un tel moyen d'humidification 6 peut être constitué par un système de pulvérisation d'eau sur lesdits moyens d'application 3, plus particulièrement sur ladite au moins une brosse 30.

Une autre caractéristique du dispositif 1 consiste en ce qu'il comporte des moyens de montage en rotation 7 qui sont configurés pour monter le filetage A en rotation autour d'un axe, ceci par rapport aux moyens de positionnement 2 et/ou par rapport aux moyens d'application 3.

En fait, de tels moyens de montage en rotation 7 du filetage A sont, de préférence, configurés pour monter le filetage A en rotation autour d'un axe qui est au moins parallèle à (voire, et de préférence, confondu avec) l'axe de rotation de ce filetage A.

Le dispositif 1 comporte, alors, également, des moyens d'entraînement en rotation 8 d'une partie des moyens de montage en rotation 7 du filetage A et, ainsi, de ce filetage A. De tels moyens d'entraînement en rotation 8 peuvent être motorisés.

Tel que visible sur les figures en annexe, la bande d'un matériau d'étanchéité B peut être enroulée au sein d'une bobine C qui comporte, alors, une telle bande d'un matériau d'étanchéité B.

Le dispositif 1 comporte, alors aussi, des moyens de montage en rotation 9 pour monter en rotation autour d'un axe (qui est de préférence parallèle à l'axe de rotation du filetage A ou à l'axe autour duquel ce filetage A est monté en rotation) une telle bobine C qui comporte la bande d'un matériau d'étanchéité B.

Encore une autre caractéristique concerne le fait que le dispositif 1 peut, alors également, comporter des moyens d'entraînement en rotation 10 d'une partie des moyens de montage en rotation 9 de la bobine C et, ainsi, de cette bobine C.

Selon une autre caractéristique, le dispositif 1 comporte des moyens d'étirement 11 qui sont configurés pour étirer la bande d'un matériau d'étanchéité B.

La présence de tels moyens d'étirement 11 permet, avantageusement, de réduire localement l'épaisseur de la bande d'un matériau d'étanchéité B ce qui a pour effet d'améliorer l'adhérence de cette bande B sur le filetage A.

A ce propos, on observera que ces moyens d'étirement 11 comportent au moins, d'une part, la pince 20 des moyens de positionnement 2 et les moyens de montage en déplacement 21 de cette pince 20 et, d'autre part, une autre pince 110 qui est configurée pour pincer la bande d'un matériau d'étanchéité B. Cette autre pince 110 peut être mobile ou (et de préférence) fixe.

De tels moyens d'étirement 11 peuvent, encore, comporter des moyens d'entraînement en déplacement (plus particulièrement en translation) de l'autre pince 110. De manière additionnelle ou (et de préférence) alternative de tels moyens d'étirement 11 peuvent comporter lesdits moyens d'entraînement en déplacement 22 (plus particulièrement en translation) d'une partie des moyens de montage en déplacement 21 de la pince 20 tels que susmentionnés.

A ce propos, on observera que les moyens d'application 3 sont, alors, plus particulièrement, configurés pour appliquer sur le filetage A la bande d'un matériau d'étanchéité B étirée.

Encore une autre caractéristique concerne le fait que le dispositif 1 comporte, aussi, des moyens de mise sous tension qui sont configurés pour mettre sous tension la bande d'un matériau d'étanchéité B.

En fait, de tels moyens de mise sous tension sont, plus particulièrement, configurés pour mettre sous tension la bande d'un matériau d'étanchéité B étirée (notamment par l'intermédiaire des moyens d'étirement 11 susmentionnés).

Les moyens d'application 3 sont, alors, plus particulièrement, configurés pour appliquer sur le filetage A la bande d'un matériau d'étanchéité B sous tension, plus particulièrement la bande d'un matériau d'étanchéité B sous tension et étirée.

A ce propos, on observera que les moyens de mise sous tension peuvent comporter les moyens d'entraînement en rotation 10 d'une partie des moyens de montage en rotation 9 de la bobine C, ceci dans un sens contraire au sens de déroulement de la bande d'un matériau d'étanchéité B par rapport à la bobine C.

De manière additionnelle ou (et de préférence) alternative, les moyens de mise sous tension peuvent comporter des moyens de freinage de la rotation d'une partie des moyens de montage en rotation 9 de la bobine C de la bande d'un matériau d'étanchéité B.

Le dispositif 1 comporte, aussi, un moyen de coupe 12 qui est configuré pour couper la bande d'un matériau d'étanchéité B, plus particulièrement après qu'au moins une partie de cette bande B ait été appliquée contre le filetage A et avant qu'une partie résiduelle de cette bande B soit appliquée contre ce filetage A.

Finalement, le dispositif 1 peut comporter au moins un codeur qui est configuré pour compter le nombre de tours de ladite bande d'un matériau d'étanchéité B appliqués contre le filetage A, c'est-à-dire le nombre d'enroulements de cette bande B autour de ce filetage A.

L'invention concerne, également, un procédé pour équiper un filetage A avec un revêtement d'étanchéité. Ce procédé sera, plus particulièrement, mis en œuvre lorsqu'il s'agit d'équiper un filetage conique A avec un tel revêtement d'étanchéité.

Ce procédé est, plus particulièrement (mais pas exclusivement), susceptible d'être mis en œuvre par le dispositif 1 pour équiper un filetage A avec un revêtement d'étanchéité tel que décrit ci-dessus.

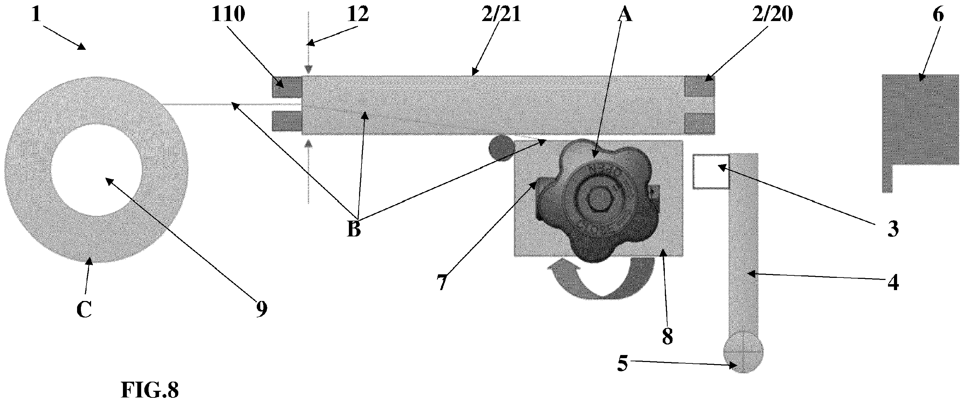

Ce procédé consiste en ce qu'on positionne une bande d'un matériau d'étanchéité B par-dessus le filetage A (figures 3 à 6), en ce qu'on applique la bande d'un matériau d'étanchéité B contre le filetage A (figure 7) et en ce qu'on assure une rotation du filetage A autour d'un axe de rotation (figure 8).

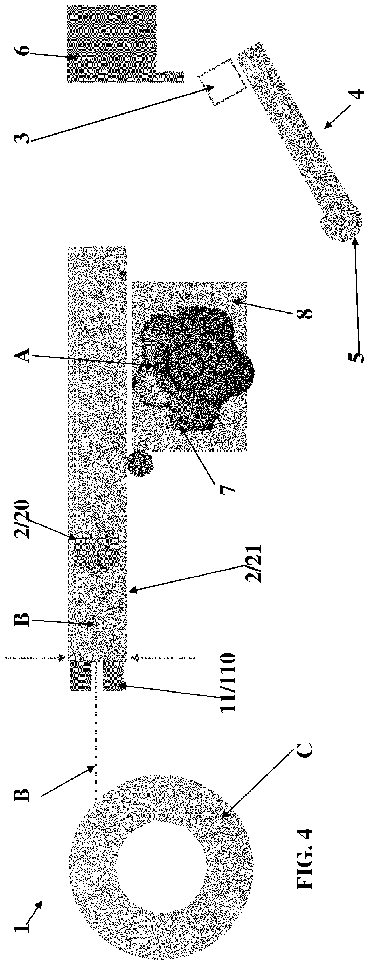

A ce propos, on observera que, lorsqu'on positionne la bande d'un matériau d'étanchéité B par-dessus le filetage A, on exerce une traction sur la bande d'un matériau d'étanchéité B (figure 4) et on étend cette bande B par-dessus le filetage A.

Plus particulièrement, en exerçant une telle traction sur la bande d'un matériau d'étanchéité B (figure 4), on déroule la bande d'un matériau d'étanchéité B à partir d'une bobine C qui comporte une telle bande d'un matériau d'étanchéité B, ceci tel que susmentionné.

En fait, on positionne une bande d'un matériau d'étanchéité B par-dessus le filetage A, notamment par l'intermédiaire des moyens de positionnement 2 (voire encore par l'intermédiaire des moyens d'entraînement en déplacement 22 d'une partie des moyens de montage en déplacement 21 de la pince 20) décrits ci-dessus.

De même, on applique la bande d'un matériau d'étanchéité B contre le filetage A, notamment par l'intermédiaire des moyens d'application 3 (voire encore par l'intermédiaire des moyens d'entraînement en déplacement 5 d'une partie des moyens de montage en déplacement 4 des moyens d'application 3) décrits ci-dessus.

Egalement, on assure une rotation du filetage A autour d'un axe de rotation, notamment par l'intermédiaire des moyens de montage en rotation 7 (voire encore par l'intermédiaire des moyens d'entraînement en rotation 8 d'une partie des moyens de montage en rotation 7 du filetage A) décrits ci-dessus. En fait, ledit axe de rotation (autour duquel on assure une telle rotation du filetage A) est au moins parallèle à (voire, et de préférence, confondu avec) l'axe de rotation de ce filetage A. En assurant une telle rotation du filetage A, on enroule la bande d'un matériau d'étanchéité B autour du filetage A, ceci pour la réalisation du revêtement d'étanchéité.

Le procédé consiste encore en ce qu'on applique la bande d'un matériau d'étanchéité B contre le filetage A (figure 7), ceci avant d'assurer la rotation du filetage A (figure 8) et/ou pendant au moins une partie de la rotation du filetage A (figure 8).

Encore une autre caractéristique du procédé selon l'invention consiste en ce que, après avoir appliqué la bande d'un matériau d'étanchéité B contre le filetage A, on continue à appliquer ladite bande d'un matériau d'étanchéité B contre le filetage A et on assure une rotation du filetage A selon un sens de rotation opposé à un sens d'enroulement de la bande B autour du filetage A. Ceci permet, alors, de coller la bande B sur le filetage A lors de la rotation de ce filetage A, plus particulièrement lorsqu'on initie une telle rotation et/ou lorsqu'on commence à équiper le filetage A avec la bande d'un matériau d'étanchéité B.

Cependant et de manière alternative, après avoir appliqué la bande d'un matériau d'étanchéité B contre le filetage A, on interrompt l'application de la bande d'un matériau d'étanchéité B contre le filetage A et on assure une rotation du filetage A (notamment de l'ordre d'un 1/2 tour) selon un sens de rotation correspondant au sens d'enroulement de la bande B autour du filetage A. Ceci permet, alors, de ne pas décoller la bande B lors de la mise en rotation du filetage A, plus particulièrement lorsqu'on initie une telle rotation et/ou lorsqu'on commence à équiper le filetage A avec la bande d'un matériau d'étanchéité B.

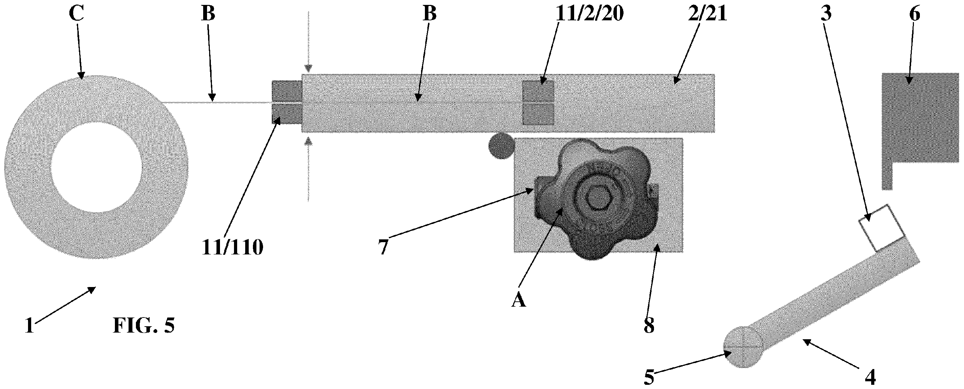

Encore une autre caractéristique du procédé selon l'invention consiste en ce que, avant d'appliquer la bande d'un matériau d'étanchéité B contre le filetage A, on étire cette bande d'un matériau d'étanchéité B (figure 5) et on applique la bande B étirée contre le filetage A (figure 7). Un tel étirement permet, avantageusement, de réduire l'épaisseur de la bande B et, ainsi, améliorer son adhérence sur le filetage A.

En fait, on étire cette bande d'un matériau d'étanchéité B notamment par l'intermédiaire des moyens d'étirement 11 décrits ci-dessus.

Une autre caractéristique de ce procédé consiste en ce qu'on met la bande d'un matériau d'étanchéité B sous tension, ceci au moins après voir appliqué (voire tout en maintenant appliquée) cette bande d'un matériau d'étanchéité B contre le filetage A, et au moins avant d'assurer la rotation de ce filetage A, plus particulièrement avant d'initier une telle rotation et/ou avant de commencer à équiper le filetage A avec la bande d'un matériau d'étanchéité B.

Une telle mise sous tension permet, avantageusement, de maximiser l'adhérence de la bande d'un matériau d'étanchéité B sur le filetage A.

De manière additionnelle, le procédé consiste en ce qu'on interrompt l'application de la bande d'un matériau d'étanchéité B contre le filetage A, ceci après avoir mis cette bande B sous tension et avant d'initier la rotation du filetage A (plus particulièrement en assurant une rotation selon un sens de rotation correspondant au sens d'enroulement de la bande B autour du filetage) et/ou avant de commencer à équiper ce filetage A avec la bande d'un matériau d'étanchéité B. L'interruption de cette application permet, avantageusement, de ne pas décoller la bande B lors de la mise en rotation du filetage A, ceci lorsqu'on initie une telle rotation et/ou avant qu'on commence à équiper le filetage A avec la bande d'un matériau d'étanchéité B.

Encore une autre particularité du procédé selon l'invention consiste en ce qu'on met la bande d'un matériau d'étanchéité B sous tension, ceci après avoir appliqué la bande d'un matériau d'étanchéité B contre le filetage A, après avoir assuré une rotation du filetage A (plus particulièrement pour initier la rotation du filetage A et/ou pour commencer à équiper le filetage A avec la bande d'un matériau d'étanchéité B, ceci tel que susmentionné), après avoir interrompu l'application de cette bande d'un matériau d'étanchéité B contre le filetage A (notamment et selon le cas, avant d'assurer une rotation selon un sens de rotation correspondant au sens d'enroulement de la bande B autour du filetage ou après avoir assuré une rotation du filetage A selon un sens de rotation opposé à un sens d'enroulement de la bande B autour du filetage A, ceci tel que susmentionné) et avant d'assurer au moins une autre rotation de ce filetage A (ceci pour la réalisation du revêtement d'étanchéité et/ou en assurant une rotation du nombre de tours souhaités pour réaliser un tel revêtement d'étanchéité).

Selon encore une autre particularité de ce procédé, après avoir initié la rotation du filetage A et/ou après avoir commencé à équiper le filetage A avec la bande d'un matériau d'étanchéité B (ceci tel que décrit ci-dessus), on applique la bande d'un matériau d'étanchéité B contre le filetage A, on assure une rotation du filetage A (tout en appliquant la bande B contre le filetage A et/ou pendant un nombre déterminé de tours, plus particulièrement 1,5 tours), on interrompt la rotation du filetage A ainsi que l'application de la bande d'un matériau d'étanchéité B contre le filetage A, on met la bande d'un matériau d'étanchéité B sous tension et on assure au moins une autre rotation du filetage A, plus particulièrement en assurant une rotation du filetage A du nombre de tours souhaités pour réaliser le revêtement d'étanchéité.

En fait, on met la bande d'un matériau d'étanchéité B sous tension notamment par l'intermédiaire des moyens d'entraînement en rotation 8 d'une partie des moyens de montage en rotation 7 du filetage A et/ou des moyens d'entraînement en rotation 10 d'une partie des moyens de montage en rotation 9 de la bobine C de la bande d'un matériau d'étanchéité B et/ou des moyens de freinage de la rotation d'une partie des moyens de montage en rotation 9 de cette bobine C.

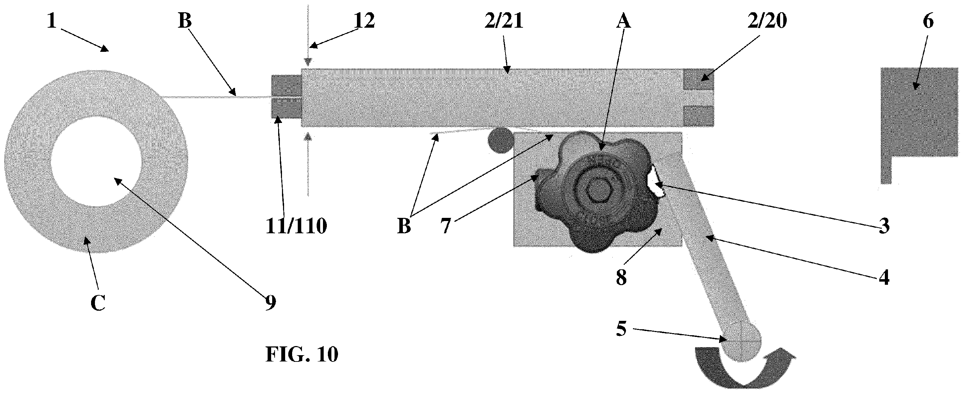

Finalement et après avoir réalisé ladite autre rotation (plus particulièrement du nombre de tours souhaités pour réaliser le revêtement d'étanchéité), le procédé consiste en ce qu'on coupe la bande d'un matériau d'étanchéité B (figure 9), en ce qu'on applique la bande B coupée contre le filetage A (figure 10), et on assure encore une autre rotation du filetage A, ceci pour finir d'enrouler la bande B sur ce filetage.

En fait, on coupe ladite bande d'un matériau d'étanchéité B par l'intermédiaire du moyen de coupe 12 susmentionné.

## Revendications

1. Dispositif (1) pour équiper un filetage (A) avec un revêtement d'étanchéité, ce dispositif (1) comporte, d'une part, des moyens de positionnement (2) qui sont configurés pour positionner une bande d'un matériau d'étanchéité (B) par-dessus le filetage (A), d'autre part, des moyens d'application (3) qui sont configurés pour appliquer la bande d'un matériau d'étanchéité (B) contre le filetage (A) et, d'autre part encore, des moyens de montage en rotation (7) qui sont configurés pour monter le filetage (A) en rotation autour d'un axe, ceci par rapport aux moyens de positionnement (2) et/ou par rapport aux moyens d'application (3).

2. Dispositif (1) pour équiper un filetage (A) avec un revêtement d'étanchéité selon la revendication 1, **caractérisé par le fait que** les moyens de positionnement (2) comportent, d'une part, une pince (20) qui est configurée pour pincer la bande d'un matériau d'étanchéité (B) et, d'autre part, des moyens de montage en déplacement (21) de la pince (20) par rapport au filetage (A).

3. Dispositif (1) pour équiper un filetage (A) avec un revêtement d'étanchéité selon l'une quelconque des revendications précédentes, **caractérisé par le fait qu'**il comporte des moyens de montage en déplacement (4) pour monter en déplacement les moyens d'application (3), ceci entre une position inactive d'application et une position active d'application.

4. Dispositif (1) pour équiper un filetage (A) avec un revêtement d'étanchéité selon l'une quelconque des revendications précédentes, **caractérisé par le fait qu'**il comporte au moins un moyen d'humidification (6) pour humidifier les moyens d'application (3).

5. Dispositif (1) pour équiper un filetage (A) avec un revêtement d'étanchéité selon l'une quelconque des revendications précédentes, **caractérisé par le fait qu'**il comporte des moyens de montage en rotation (9) pour monter en rotation autour d'un axe une bobine (C) qui comporte la bande d'un matériau d'étanchéité (B).

6. Dispositif (1) pour équiper un filetage (A) avec un revêtement d'étanchéité selon l'une quelconque des revendications précédentes, **caractérisé par le fait qu'**il comporte des moyens d'entraînement en déplacement (22) d'une partie des moyens de montage en déplacement (21) de la pince (20) et/ou des moyens d'entraînement en déplacement (5) d'une partie des moyens de montage en déplacement (4) des moyens d'application (3) et/ou des moyens d'entraînement en rotation (8) d'une partie des moyens de montage en rotation (7) du filetage (A) et/ou des moyens d'entraînement en rotation (10) d'une partie des moyens de montage en rotation (9) de la bobine (C).

7. Dispositif (1) pour équiper un filetage (A) avec un revêtement d'étanchéité selon l'une quelconque des revendications précédentes, **caractérisé par le fait qu'**il comporte des moyens d'étirement (11) qui sont configurés pour étirer la bande d'un matériau d'étanchéité (B).

8. Dispositif (1) pour équiper un filetage (A) avec un revêtement d'étanchéité selon les revendications 2 et 7, **caractérisé par le fait que** les moyens d'étirement (11) comportent au moins, d'une part, la pince (20) des moyens de positionnement (2) et les moyens de montage en déplacement (21) de la pince (20) et, d'autre part, une autre pince (110) qui est configurée pour pincer la bande d'un matériau d'étanchéité (B).

9. Dispositif (1) pour équiper un filetage (A) avec un revêtement d'étanchéité selon l'une quelconque des revendications précédentes, **caractérisé par le fait qu'**il comporte des moyens de mise sous tension qui sont configurés pour mettre sous tension la bande d'un matériau d'étanchéité (B).

10. Procédé pour équiper un filetage (A) avec un revêtement d'étanchéité, ce procédé consiste en ce qu'on positionne une bande d'un matériau d'étanchéité (B) par-dessus le filetage (A), en ce qu'on applique la bande d'un matériau d'étanchéité (B) contre le filetage (A), et en ce qu'on assure au moins une rotation du filetage (A) autour d'un axe de rotation.

11. Procédé pour équiper un filetage (A) avec un revêtement d'étanchéité selon la revendication 10, **caractérisé par le fait que** lorsqu'on positionne la bande d'un matériau d'étanchéité (B) par-dessus le filetage (A), on exerce une traction sur la bande d'un matériau d'étanchéité (B) et on étend cette bande (B) par-dessus le filetage (A).

12. Procédé pour équiper un filetage (A) avec un revêtement d'étanchéité selon l'une quelconque des revendications 10 ou 11, **caractérisé par le fait qu'**on applique la bande d'un matériau d'étanchéité (B) contre le filetage (A), ceci avant d'assurer la rotation du filetage (A) et/ou pendant au moins une partie de la rotation du filetage (A).

13. Procédé pour équiper un filetage (A) avec un revêtement d'étanchéité selon l'une quelconque des revendications 10 à 12, **caractérisé par le fait que**, après avoir appliqué la bande d'un matériau d'étanchéité (B) contre le filetage (A), soit on continue à appliquer ladite bande d'un matériau d'étanchéité (B) contre le filetage (A) et on assure une rotation du filetage (A) selon un sens de rotation opposé à un sens d'enroulement de la bande (B) autour du filetage (A), soit on interrompt l'application de la bande d'un matériau d'étanchéité (B) contre le filetage (A) et on assure une rotation du filetage (A) selon un sens de rotation correspondant au sens d'enroulement de la bande (B) autour du filetage (A).

14. Procédé pour équiper un filetage (A) avec un revêtement d'étanchéité selon l'une quelconque des revendications 10 à 13, **caractérisé par le fait que**, avant d'appliquer la bande d'un matériau d'étanchéité (B) contre le filetage (A), on étire cette bande d'un matériau d'étanchéité (B) et on applique la bande (B) étirée contre le filetage (A).

15. Procédé pour équiper un filetage (A) avec un revêtement d'étanchéité selon l'une quelconque des revendications 10 à 14, **caractérisé par le fait qu'**on met la bande d'un matériau d'étanchéité (B) sous tension, ceci au moins après avoir appliqué cette bande d'un matériau d'étanchéité (B) contre le filetage (A), et au moins avant d'assurer la rotation de ce filetage (A).

16. Procédé pour équiper un filetage (A) avec un revêtement d'étanchéité selon la revendication 15, **caractérisé par le fait qu'**on met la bande d'un matériau d'étanchéité (B) sous tension, ceci après voir appliqué la bande d'un matériau d'étanchéité (B) contre le filetage (A), après avoir assuré une rotation du filetage (A), après avoir interrompu l'application de cette bande d'un matériau d'étanchéité (B) contre le filetage (A), et avant d'assurer au moins une autre rotation de ce filetage (A).
